# EUROPÄISCHE PATENTSCHRIFT

(11) **EP 3 784 920 B1**
(45) Veröffentlichungstag und Bekanntmachung des Hinweises auf die Patenterteilung: **18.01.2023**
(21) Anmeldenummer: 19721519.7
(22) Anmeldetag: 18.04.2019
(51) Int. Cl.: F16D 55/22, F16D 65/09, F16D 65/14, F16D 65/18

(54) **SCHWIMMSATTELBREMSE**
FLOATING-CALIPER BRAKE
FREIN À ÉTRIER FLOTTANT

(30) Priorität: 25.04.2018 AT 503442018
(43) Veröffentlichungstag der Anmeldung: 03.03.2021
(73) Patentinhaber: VE Vienna Engineering Forschungs- und Entwicklungs GmbH, 1010 Wien (AT)
(72) Erfinder: PUTZ, Michael, 8272 Sebersdorf (AT)
(74) Vertreter: Patentanwälte Pinter & Weiss OG
(86) Internationale Anmeldenummer: PCT/AT2019/060132
(87) Internationale Veröffentlichungsnummer: WO 2019/204843

(56) Entgegenhaltungen:
- EP-A1- 3 269 993
- DE-A1-102012 006 111
- DE-A1-102016 103 187
- US-A- 4 036 330
- US-A- 4 382 491
- US-B1- 6 286 635
- US-B1- 6 397 983

## Beschreibung

Die gegenständliche Erfindung betrifft eine Schwimmsattelbremse mit einem schwimmend an einer Stützkonstruktion der Schwimmsattelbremse gelagerten Bremssattel, an dem ein erster Bremsbelag und eine Andrückeinrichtung angeordnet sind, wobei an der Andrückeinrichtung ein zweiter Bremsbelag angeordnet ist und die Andrückeinrichtung zur Betätigung der Schwimmsattelbremse den zweiten Bremsbelag in Richtung zum ersten Bremsbelag bewegt und zum Lösen der Schwimmsattelbremse den zweiten Bremsbelag in Richtung vom ersten Bremsbelag weg bewegt, wobei am Bremssattel ein Abhebeteil an einem Gelenkpunkt angelenkt ist.

Sattelbremsen, vor allem als Scheibenbremse, sind sehr weit verbreitet und finden insbesondere in Fahrzeugen und Maschinen Anwendung. Bei einer Schwimmsattelbremse als bekannte Ausführung einer Sattelbremse wird bekannter Weise bei einer Bremsung zumindest ein Bremsbelag mittels einer Andrückeinrichtung zur Bremsscheibe zugestellt. Sobald der Bremsbelag in Kontakt mit der Bremscheibe gerät wird der zweite, gegenüberliegende Bremsbelag durch die wirkenden Reaktionskräfte und der schwimmenden Lagerung des Bremssattels zugestellt, bis beide Bremsbeläge in Kontakt mit der Bremsscheibe sind. Schwimmsattelbremsen haben das generelle Problem der Rückstellung der Bremsbeläge nach der Bremsung, da zumindest der Bremsbelag ohne Andrückeinrichtung normalerweise nicht aktiv von der Bremsscheibe abgehoben werden kann. Nur der von der Andrückeinrichtung betätigte Bremsbelag kann aktiv abgehoben werden. Es kommt daher oft vor, dass nach der Bremsung, wenn die Bremsbeläge von der Bremsscheibe abgehoben werden sollten, ein Bremsbelag nicht oder nicht vollständig von der Bremsscheibe abgehoben wird. Damit schleift ein Bremsbelag nach der Bremsung an der Bremsscheibe, was zu erhöhtem Verschleiß (Bremsbelag, Bremsscheibe) und zu Verlusten führt. In einem Fahrzeug können dabei Verlustleistungen von typischerweise 0,1kW bis in den Bereich von einigen kW pro Bremse auftreten. Diese entstehenden Verluste erhöhen natürlich auch die benötigte Antriebsleistung und, im Falle eines Kraftfahrzeuges damit auch den Kraftstoffverbrauch. Insbesondere bei Elektrofahrzeugen ist ein derartiger Verlust ein großes Problem, da derartige Verluste die Reichweite des Fahrzeugs deutlich reduzieren kann.

Um ein Abheben der beiden Bremsbeläge von der Bremsscheibe nach einer Bremsung zu erzwingen gibt es verschiedene Ansätze im bekannten Stand der Technik. Bei herkömmlichen, hydraulischen Schwimmsattelbremsen werden oftmals die O-Ringe des Hydraulikkolbens verwendet und die Elastizität der O-Ringe genutzt, um den Hydraulikkolben aktiv zurückzuziehen. Das funktioniert allerdings erstens nur auf der Kolbenseite und zweitens nur solange der O-Ring ausreichend elastisch ist, was sich im Laufe der Betriebszeit der Bremse allerdings verschlechtert. Abgesehen davon kann es dabei immer noch vorkommen, dass der Bremsbelag an seinem Anschlag im Bremssattel haftet, oder dass der Bremssattel selbst klemmt, was eine derartige Rückstellung mit dem Ziel des Abhebens beider Bremsbeläge wirkungslos macht. Sattelbremsen, insbesondere in Fahrzeugen, werden in sehr rauen Umgebungen bei verschiedensten Umgebungsbedingungen betrieben, was zu Verschmutzung, Korrosion und anderen Verschleißerscheinungen an Bremsenteilen führt. Das ist auch mit ein Grund, weshalb die beidseitige Rückstellung über die O-Ringe nicht oder nur sehr bedingt funktioniert.

Andere Ansätze zur beidseitigen Rückstellung nutzen Federn oder andere elastische Elemente zur Rückstellung. Ein Beispiel hierfür ist die US 4,193,481 A, bei der eine elastische Hülse verwendet wird, die zwischen Schwimmsattel und dessen Führung wirkt. In der US 4,375,842 A wird wiederum ein Reibring zwischen Hydraulikkolben und Hydraulikzylinder im Bremssattel verwendet. Der Reibring erzwingt beim Lösen der Bremse ein beidseitiges Abheben der Bremsbeläge. Eine ähnliche Lösung kann auch der WO 2010/133463 A1 für eine elektromechanische Reibungsbremse entnommen werden. In der EP 2 644 926 A1 wird eine Blattfeder zur Rückstellung verwendet, wobei die Blattfeder am Belagsträger angeordnet ist sich an der Scheibenführung abstützt. Auch diese Lösungen haben aber das Problem des nicht immer zuverlässigen Abhebens beider Bremsbeläge nach einer Bremsung.

Auch in der US 6,286,635 B1 wird eine Feder zur Rückstellung der Bremsbeläge einer Schwimmsattelbremse genutzt. Die Feder wird mittels einer Nocke selektiv zwischen dem Bremssattel und der Andrückeinrichtung der Bremse gespannt. Dabei werden die Bremsbeläge auseinandergedrückt und von der Bremsscheibe abgehoben. Diese Feder beeinflusst allerdings auch das Bremsverhalten, da die Federkraft beim Bremsen überwunden werden muss.

In der JP 2011058584 A1 ist eine Sattelbremse mit Rückstellung beschrieben. Zur Rückstellung ist ein Hebel drehbar gelagert angeordnet, der mit einem Ende am angetriebenen Bremsbelagsträger anliegt und mit dem anderen Ende am Schwimmsattel. Beim Lösen der Bremse wird der Hebel durch das Zurückziehen des Bremsbelagsträgers verdreht, sodass der Schwimmsattel mit dem darauf angeordneten Bremsbelag ebenfalls von der Bremsscheibe weggedrückt wird. Obwohl damit die Bremsbeläge sicher abgehoben werden können, kann die Realisierung praktisch aufwendig sein, insbesondere der Schutz des Mechanismus gegen die rauen Umgebungsbedingungen im Umfeld der Sattelbremse.

Aus der EP 3 269 992 A1 ist eine Sattelbremse bekannt, in der ein Mechanismus vorgesehen ist, um die Bremsbeläge nach einer Bremsung sicher von der Bremsscheibe abzuheben. Dazu ist in der Sattelbremse ein Koppelungsteil vorgesehen, der eine mechanische Zwangskopplung zwischen einem beweglichen Bremsenteil (Schwimmsattel) und einem ortsfesten Bremsenteil bewirkt. Dieser Koppelungsteil wird während dem Lösen der Bremsen von einer Betätigungseinheit angetrieben, sodass der bewegliche Bremsenteil aufgrund der mechanischen Zwangskopplung relativ zum ortsfesten Bremsenteil verschoben wird, wodurch die Bremsbeläge sicher abgehoben werden können. Obwohl damit die Bremsbeläge sicher abgehoben werden können, kann die Realisierung praktisch aufwendig sein, insbesondere der Schutz des Mechanismus gegen die rauen Umgebungsbedingungen im Umfeld der Sattelbremse.

Es ist daher eine Aufgabe der gegenständlichen Erfindung auf einfache und leicht zu realisierende Weise ein sicheres Abheben beider Bremsbeläge einer Schwimmsattelbremse nach dem Lösen der Bremse sicherzustellen.

Diese Aufgabe wird erfindungsgemäß dadurch erreicht, dass der Abhebeteil zumindest teilweise beim Lösen der Schwimmsattelbremse an der Stützkonstruktion an einem Berührpunkt abgestützt ist, und dass ein Abhebeantrieb vorgesehen ist, der den Abhebeteil um den Gelenkpunkt verdreht, sodass am Berührpunkt ein Auflager für den Abhebeteil entsteht, wodurch sich der Gelenkpunkt und der Bremssattel verschieben. Durch das entstehende Auflager im Berührpunkt des Abhebeteils an der Stützkonstruktion wird sichergestellt, dass beim Lösen der Schwimmsattelbremse der Bremssattel relativ zur Stützkonstruktion bewegt wird, wodurch auch der am Bremssattel angeordnete erste Bremsbelag zwangsweise von der Bremsscheibe abgehoben wird. Auf diese Weise kann sichergestellt werden, dass beim Lösen der Schwimmsattelbremse beide Bremsbeläge sicher von der Bremsscheibe abgehoben werden. Durch die Anordnung des Abhebeteiles am Gelenkpunkt am Bremssattel kann dieser Abhebemechanismus sehr einfach in die Schwimmsattelbremse integriert werden und auch einfach und sicher gegen die Einflüsse der Außenwelt, wie Nässe, Schmutz, Eis, Schnee, usw., gekapselt werden.

Vorzugsweise liegt der Abhebeteil bei betätigter Schwimmsattelbremse am Berührpunkt an der Stützkonstruktion an bis die Schwimmsattelbremse vollständig gelöst ist. Damit kann sich der Abhebeteil bei anliegenden Bremsbelägen an der Stützkonstruktion zentrieren und es kann ausgehend von dieser Lage ein kontrolliertes gewünschtes Abhebemaß realisiert werden.

Besonders einfach lässt sich der Abhebemechanismus umsetzen, wenn der Abhebeteil während der Betätigung und dem Lösen am Berührpunkt an der Stützkonstruktion anliegt, wobei sich der Berührpunkt beim Betätigen der Schwimmsattelbremse an der Stützkonstruktion verschiebt. Dabei ist es nicht erforderlich, den Abhebeteil während gewisser Phasen der Bremsung von der Stützkonstruktion abzuheben.

Um eine gleichmäßige, zuverlässige Abhebung beider Bremsbeläge zu realisieren, können mehrere Kopplungsteile am Bremssattelt angeordnet sein, die jeweils an der Stützkonstruktion an einem Berührpunkt anliegen und die von einem oder mehreren Abhebeantrieben betätigt sind. Auf diese Weise können ein mögliches Verkanten und Klemmen des Bremssattels einfach verhindert werden.

In einer besonders vorteilhaften Ausgestaltung ist ein Abhebeteil an zwei Gelenkpunkten am Bremssattel angelenkt und die beiden Enden des Abhebeteiles sind zumindest teilweise beim Lösen der Schwimmsattelbremse an der Stützkonstruktion an jeweils einem Berührpunkt abgestützt, wobei der Abhebeantrieb den Abhebeteil um beide Gelenkpunkte verdreht. Damit kann mit einem einzigen bügelförmigen Abhebeteil und einem Abhebeantrieb ein gleichmäßiges sicheres Abheben beider Bremsbeläge umgesetzt werden.

Ganz besonders vorteilhaft ist es, wenn die Andrückeinrichtung gleichzeitig als Abhebeantrieb dient, weil damit nur ein einziger Antrieb für die Betätigung und für das Abheben der Bremsbeläge benötigt wird. Die notwendige Bewegung für den Abhebeteil kann dabei direkt von der Andrückeinrichtung, oder vom Andrückantrieb der Andrückeinrichtung, aufgebracht werden oder kann auch davon abgeleitet werden, beispielsweise mittels geeigneter Getriebe, Nocken, etc.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 und 2 eine erfindungsgemäße Schwimmsattelbremse mit Abhebeteil und
Fig.3 bis 5 die Funktion des Abhebeteils anhand einer eine vorteilhafte Ausgestaltung des Abhebeteiles.

Eine Schwimmsattelbremse 1 besteht im Wesentlichen aus einem schwimmend gelagerten Bremssattel 2 an dem ein erster Bremsbelag 4, in der Regel starr (d.h. relativ zum Bremssattel 2 nicht bewegbar aber natürlich bedarfsweise austauschbar), angeordnet ist und einer Andrückeinrichtung 6, an der ein zweiter Bremsbelag 5 (natürlich bedarfsweise austauschbar) angeordnet ist. Zum Bremsen wirken die beiden Bremsbeläge 4, 5 mit einer Bremsscheibe 3 zusammen. Durch die Andrückeinrichtung 6 kann der zweite Bremsbelag 5 relativ zum Bremssattel 2 bewegt werden, insbesondere der zweite Bremsbelag 5 in Richtung zum ersten Bremsbelag 4 hin, oder davon weg, bewegt werden. Die Schwimmsattelbremse 1 dient dazu, eine translatorische Bewegung (z.B. bei einer Aufzugsbremse oder eines linear bewegten Maschinenteils) oder rotatorische Bewegung (z.B. eine Drehbewegung eines Fahrzeugsrades oder eines drehenden Maschinenteils) zu bremsen. Dazu werden die beiden Bremsbeläge 4, 5 mit der Andrückeinrichtung 6 gegen die Bremsscheibe 3 gepresst, wodurch eine Bremswirkung (Bremskraft oder Bremsmoment) entsteht. Unter Bremsscheibe 3 wird im Sinne der Erfindung jede Reibfläche verstanden, die mit den Bremsbelägen 4, 5 zum Erzielen einer Bremswirkung zusammenwirkt. Zwischen der Reibfläche und den Bremsbelägen 4, 5 kommt es zu einer Relativbewegung (Rotation, Translation), die durch die Schwimmsattelbremse 1 gebremst wird. Üblicherweise bewegt sich entweder die Bremsscheibe 3 und Schwimmsattelbremse 1 ist im Wesentlichen ortsfest (z.B. wie bei einem Fahrzeugrad) oder die Bremsscheibe 3 ist ortsfest und die Schwimmsattelbremse 1 bewegt sich relativ zur Bremsscheibe 3 (z.B. wie bei einer Aufzugsbremse).

Die Schwimmsattelbremse 1 ist an einer Stützkonstruktion 7 angeordnet. Am Beispiel eines Fahrzeugs wäre die Stützkonstruktion 7 beispielsweise an der Radlagerung angeordnet und die Bremsscheibe 3 wäre drehfest mit der Radnabe verbunden und würde sich mit dieser mitdrehen. Am Beispiel einer Aufzugsbremse wäre die Stützkonstruktion 7 beispielsweise an der Aufzugskabine befestigt und die Bremsscheibe 3 wäre eine im Aufzugsschacht angeordnete Reibfläche. Bezogen auf die Schwimmsattelbremse 1, oder deren beweglichen Bauteilen, ist die Stützkonstruktion 7 ortsfest.

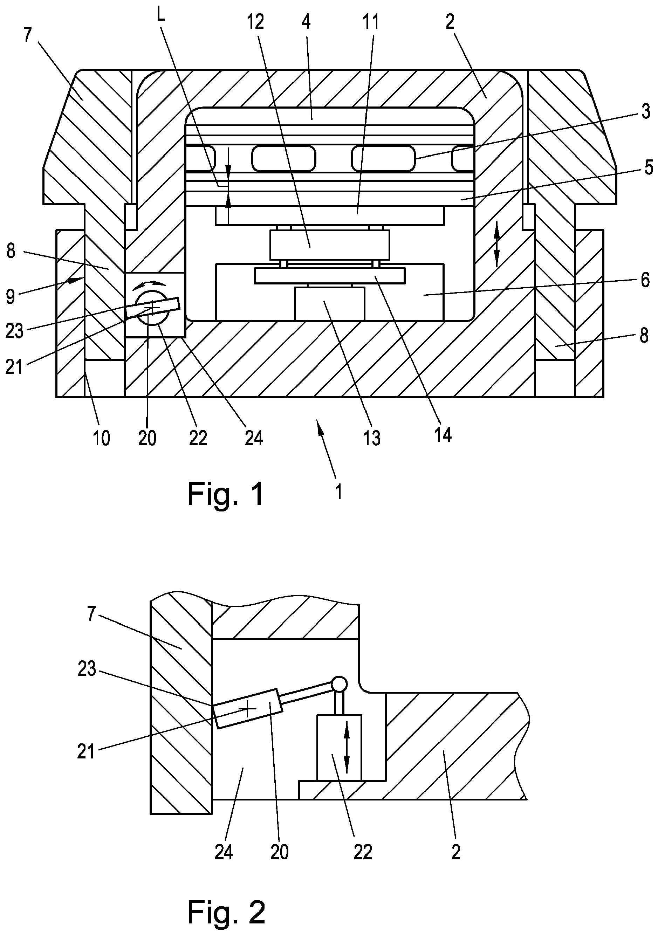

Der Bremssattel 2 der Schwimmsattelbremse 1 ist quer zur Relativbewegung zwischen Bremsscheibe 3 und Bremsbelägen 4, 5 in einer Sattelführung 9 verschiebbar gelagert angeordnet. Die Sattelführung 9 erlaubt die Querbewegung (in Fig.1 durch den Doppelpfeil angedeutet) des Bremssattels 2 und verhindert gleichzeitig, dass der Bremssattel 2 beim Bremsen durch die auftretenden Reibungskräfte mit der drehenden Bremsscheibe 3 mitbewegt wird. Durch die Querbewegung können die beiden Bremsbeläge 4, 5 aufeinander zu oder voneinander wegbewegt werden. Die Sattelführung 9 kann Teil der Stützkonstruktion 7 sein, oder kann an der Stützkonstruktion 7 angeordnet sein. Im gezeigten Ausführungsbeispiel ist die Sattelführung 9 als Führungszapfen 8 an der Stützkonstruktion 7 ausgeführt. Am Bremssattel 2 ist dabei ein Führungsloch 10 vorgesehen, in das der Führungszapfen 8 eingeführt ist, wodurch der Bremssattel 2 am Führungszapfen 8 verschiebbar gelagert ist. Durch die Führung des Führungslochs 10 am Führungszapfen 8 kann der Bremssattel 2 die Querbewegung ausführen. Die Sattelführung 9 wird vorzugsweise gegen äußere Verschmutzung und andere äußere Einflüsse geschützt. Beispielsweise kann ein Führungszapfen 8 der Sattelführung 9 mit Faltbälgen und/oder Dichtungen gut gegen Verschmutzungen geschützt werden. Natürlich sind auch andere Ausführungen einer Sattelführung 9, wie z.B. Führungsflächen, möglich.

Die Andrückeinrichtung 6 ist am Bremssattel 2 angeordnet, womit sich auch die Andrückeinrichtung 6 an der Stützkonstruktion 7 abstützt. Bei der Schwimmsattelbremse 1 wird demnach in bekannter Weise durch die Andrückeinrichtung 6 der Sattelbremse 1 der zweite Bremsbelag 5 auf der Andrückeinrichtung 6 in Richtung des ersten Bremsbelags 4 bewegt und dadurch gegen die Bremsscheibe 3 gedrückt. Durch die entstehenden Reaktionskräfte verschiebt sich der Bremssattel 2 mit dem daran angeordneten ersten Bremsbelag 4 in der Sattelführung 9 bis beide Bremsbeläge 4, 5 an der Bremsscheibe 3 anliegen und bei weiterer Betätigung eine Bremswirkung (Bremskraft, Bremsmoment) erzeugt wird. Die Betätigung kann aber natürlich auch so ausgeführt sein, dass durch die Andrückeinrichtung 6 zuerst der Bremssattel 2 mit dem ersten Bremsbelag 4 zur Bremsscheibe 3 zugestellt wird und erst danach der zweite Bremsbelag 5. Die Bremsscheibe 3 ist dabei natürlich zwischen den beiden Bremsbelägen 4, 5 angeordnet.

Der zweite Bremsbelag 5 kann auch auf einem Halteteil 11 angeordnet sein, wobei das Halteteil 11 von der Andrückeinrichtung 6 bewegt wird. Ebenso kann ein Verschleißnachsteller 12 vorgesehen sein, um in bekannter Weise allfälligen Verschleiß an den Bremsbelägen 4, 5 und/oder an der Bremsscheibe 3 auszugleichen. Mit dem Verschleißnachsteller 12 kann hierfür in bekannter Weise der Luftspalt L zwischen abgehobenen Bremsbelag 5 und der Bremsscheibe 3 verändert werden, insbesondere ein während des Betriebs der Schwimmsattelbremse 1 größer werdender Luftspalt L wieder verkleinert werden. Der Verschleißnachsteller 12 ist im gezeigten Ausführungsbeispiel zwischen Andrückeinrichtung 6 und zweitem Bremsbelag 5 oder Halteteil 11 angeordnet. Der Verschleißnachsteller 12 könnte aber in gleicher Weise zwischen Andrückeinrichtung 6 und Bremssattel 2 angeordnet sein. Selbstverständlich kann die Schwimmsattelbremse 1 auch ohne Verschleißnachsteller 12 ausgeführt sein. Die konkrete Realisierung des Verschleißnachstellers 12 ist für die Erfindung unerheblich, weshalb nicht näher darauf eingegangen wird.

Wie die Andrückeinrichtung 6 zur Betätigung der Schwimmsattelbremse 1 konkret ausgeführt ist, ist für die gegenständliche Erfindung ebenso irrelevant. Die Andrückeinrichtung 6 kann einen Andrückantrieb 13 umfassen, der ein Andrückteil 14 der Andrückeinrichtung 6 bewegt. Über den Andrückteil 14 wird wiederum der zweite Bremsbelag 5, eventuell über einen Halteteil 11 und/oder einen Verschleißnachsteller 12, bewegt. Zum Betätigen der Schwimmsattelbremse 1 wird demnach ein vom Andrückantrieb 13 angetriebener beweglicher Andrückteil 14 bewegt, um die Bremsscheiben 4, 5 zur Bremsscheibe 3 hin oder von der Bremsscheibe 3 weg zu bewegen. Je nach Ausführung der Schwimmsattelbremse 1 bewegt der bewegliche Andrückteil 14 zumindest den zweiten Bremsbelag 5 und optional auch ein Halteteil 11 und/oder einen Verschleißnachsteller 12. Der Andrückantrieb 13 kann hydraulisch, pneumatisch oder elektromechanisch ausgeführt kann. Besonders bevorzugt sind elektromechanische Ausführungen der Andrückeinrichtung 6, wie beispielsweise in der EP 2 433 025 B1 oder der WO 2014/139919 der Anmelderin beschrieben.

Beim Betätigen der Schwimmsattelbremse 1 werden in bekannter Weise wie oben beschrieben die beiden Bremsbeläge 4, 5 mit der Andrückeinrichtung 6 gegen die Bremsscheibe 3 gedrückt, wodurch durch die aufgebrachte Andrückkraft eine Bremswirkung erzeugt wird, z.B. in Form eines Bremsmomentes. Beim Lösen der Schwimmsattelbremse 1 hebt die Andrückeinrichtung 6 den daran angeordneten zweiten Bremsbelag 5 von der Bremsscheibe 3 ab. Ein grundlegendes bekanntes Problem einer Schwimmsattelbremse 1 besteht darin, dass der erste Bremsbelag 4 beim Lösen der Sattelbremse 1 unter Umständen nicht oder nicht zur Gänze von der Bremsscheibe 3 mitabgehoben wird, sondern nur der aktiv bewegte zweite Bremsbelag 5. Aufgrund des aufrecht bleibenden Kontakts zwischen erstem Bremsbelag 4 und Bremsscheibe 3 entsteht zum einen im an sich bremsfreien Zustand ein Verlust, der vom Antrieb der gebremsten Vorrichtung (z.B. ein Fahrzeug) aufgebracht werden muss. Diese Verluste führen zu einem unerwünschten erhöhten Verbrauch des Antriebs (z.B. Treibstoff oder elektrische Energie). Zum anderen wird dadurch natürlich auch der Verschleiß von Bremsscheibe 3 und erstem Bremsbelag 4 erhöht, was ebenfalls unerwünscht ist.

Um dem entgegenzuwirken ist erfindungsgemäß ein Abhebeteil 20 vorgesehen, der am Bremssattel 2 drehbar an einem Gelenkpunkt 21 angelenkt ist, womit der Gelenkpunkt 21 und der Abhebeteil 20 mit dem Bremssattel 2 mitbewegt wird. Der Abhebeteil 20 erstreckt sich vom Gelenkpunkt 21 bis zu einem Teil der Stützkonstruktion 7 der Schwimmsattelbremse 1 und liegt an dieser an einem Berührpunkt 23 an. Am Berührpunkt 23 ist keine Lagerung oder ein Gelenk zwischen Abhebeteil 20 und Stützkonstruktion 7 vorgesehen, sondern es liegt lediglich ein berührender Kontakt zwischen Abhebeteil 20 und Stützkonstruktion 7 vor. Dieser Kontakt kann bedarfsweise auch aufgehoben und hergestellt werden. Die Stelle des Berührpunktes 23 an der Stützkonstruktion 7 kann auch veränderlich sein. In der gezeigten Ausführung der Fig.1 liegt der Abhebeteil 20 am Führungszapfen 8 der Sattelführung 9 an. Es ist ferner ein Abhebeantrieb 22 vorgesehen, der den Abhebeteil 20 um den Gelenkpunkt 21 verdrehen kann, wie in Fig.1 angedeutet. Die Funktion dieses Abhebeteiles 20 wird nachfolgend erläutert.

Bei einer Bremsung wird der Bremssattel 2 mit dem ersten Bremsbelag 4 wie oben beschrieben irgendwann gegen die Bremsscheibe 3 bewegt. Damit verschiebt sich mit dem Bremssattel 2 auch der am Gelenkpunkt 21 angelenkte Abhebeteil 20 mit. Der Abhebeteil 20 wird damit relativ zur Stützkonstruktion 7, hier der Sattelführung 9, bewegt. Aufgrund der wirkenden Betätigungskräfte für die Bremsung verschiebt sich dabei auch der Berührpunkt 23 an der Stützkonstruktion 7. Im Ausführungsbeispiel nach der Fig.1 würde der Berührpunkt 23 mit dem Bremssattel 2 etwas nach unten wandern. Damit zentriert sich der Abhebeteil 20, oder der Berührpunkt 23, an der Stützkonstruktion 7 an einer Position, an der beide Bremsbeläge 4, 5 an der Bremsscheibe 3 anliegen.

Nach der Bremsung wird der mit der Andrückeinrichtung 6 bewegte zweite Bremsbelag 5 zum Lösen der Schwimmsattelbremse 1 von der Bremsscheibe 3 weggefahren. Dabei verschiebt sich aber der Bremssattel 2 mit dem ersten Bremsbelag 4 und dem Gelenkpunkt 21 nicht zwangsweise oder nicht ausreichend. Um den ersten Bremsbelag 4, der am Bremssattel 2 angeordnet ist, ebenfalls von der Bremsscheibe 3 abzuheben, wird der Abhebeantrieb 22 betätigt, sodass es zu einer kraft- oder formschlüssigen Verbindung zwischen dem Abhebeteil 20 und der Stützkonstruktion 7 am Berührpunkt 23 kommt. Damit entsteht an der Stützkonstruktion 7 im Berührpunkt 23 für den Abhebeteil 20 ein Auflager, das bezogen auf die Stützkonstruktion 7 ortsfest ist, und der Bremssattel 2 wird durch den Abhebeteil 20 über den Gelenkpunkt 21 in Querrichtung, in der Ausführung nach Fig.1 nach oben, verschoben. Dadurch hebt sich auch der mit dem Bremssattel 2 verbundene erste Bremsbelag 4 von der Bremsscheibe 3 ab.

Im Ausführungsbeispiel nach der Fig.1 würde der Abhebeteil 20 gegen den Uhrzeigersinn verdreht werden. Aufgrund eines Reibschlusses (kraftschlüssige Kopplung) entsteht ein Auflager im Berührpunkt 23 des Abhebeteil 20 an der Stützkonstruktion 7 (hier am Führungszapfen 8 der Sattelführung 9). Das Auflager ist damit relativ zur Stützkonstruktion 7 ortsfest und bei Weiterdrehen des Abhebeteils 20 gegen den Uhrzeigersinn wird der Gelenkpunkt 21 zwangsweise in Querrichtung verschoben, im Ausführungsbeispiel nach Fig.1 nach oben. Damit wird der Bremssattel 2 mit dem ersten Bremsbelag 4 zwangsweise von der Bremsscheibe 3 abgehoben.

In einer realen Ausführung des Abhebeteils 20 wird im Berührpunkt 23 immer eine gewisse Abrollbewegung des Abhebeteils 20 an der Stützkonstruktion 7 stattfinden, beispielsweise weil der Abhebeteil 20 am Ende eine gewisse Abrundung aufweisen wird. Eine solche kleine Abrollbewegung wird im Sinne der Erfindung aber immer noch als ortsfest relativ zur Stützkonstruktion 7 verstanden. Dabei kann sogar eine Art Übersetzung realisiert werden. Wenn der Abhebeteil 20 über eine Erhebungskurve an der Stützkonstruktion 7 anliegt und die Erhebungskurve beim Verdrehen des Abhebeteiles 20 an der Stützkonstruktion 7 abrollt, kann die Drehbewegung des Abhebeteiles 20 in eine gewünschte Verschiebebewegung des Bremssattel 2 übersetzt werden. Aber auch eine solche Abrollbewegung wird im Sinne der Erfindung als ortsfest verstanden, weil zu jedem Zeitpunkt im aktuellen Berührpunkt 23 ein Auflager für den Abhebeteil 20 entsteht.

Anstelle eines Reibschlusses im Berührpunkt 23 könnte natürlich auch ein Formschluss realisiert werden. Dazu könnte am Teil der Stützkonstruktion 7, die mit dem Abhebeteil 20 in Eingriff gerät, Stützkerben, beispielsweise in Form einer feinen Verzahnung, vorgesehen sein, in die ein Teil des Abhebeteils 20, beispielsweise eine Kante oder ein Zahn, einrastet. Die Stützkerben können so ausgeführt sein, dass bei einer Zuspannbewegung des Bremssattels 2 der Abhebeteil 20 über die Stützkerben gezogen wird. Beim Verdrehen des Abhebeteils 20 kann dieser in die Stützkerben einrasten und damit einen Formschluss herstellen, womit wieder ein Auflager für das Abhebeteil 20 erzeugt wird.

Ebenso ist es möglich, dass der Abhebeteil 20 bei einer Zuspannbewegung des Bremssattels 2 vom Abhebeantrieb 22 gänzlich von der Stützkonstruktion 7 abgehoben wird, um auch einen damit verbundenen Verlust oder Verschleiß zu vermeiden. Erst wenn beide Bremsbeläge 4, 5 an der Bremsscheibe 3 anliegen, könnte der Abhebeteil 20 in Richtung Stützkonstruktion 7 bewegt werden, bis der Abhebeteil 20 am Berührpunkt 23 anliegt. Der Abhebeteil 20 kann auch immer von der Stützkonstruktion 7 abgehoben sein und nur zur Realisierung der Verschiebebewegung zum Verschieben des Bremssattels 2 zum Abheben des ersten Bremsbelages 4 zur Stützkonstruktion 7 zur Herstellung der Berührung zugestellt werden, beispielsweise mittels des Abhebeantriebs 22.

Der Abhebeantrieb 22 muss auch nicht zwingend eine Drehbewegung realisieren, um den Abhebeteil 20 im Gelenkpunkt 21 zu verdrehen. Eine mögliche vorteilhafte Ausgestaltung des Abhebeteils 20 könnte in Form eines Hebels sein, wie in Fig.2 dargestellt. Der in dieser Ausführung hebelförmige Abhebeteil 20 ist dabei am Gelenkpunkt 21 am Bremssattel 2 angelenkt. Ein erstes Ende des hebelförmigen Abhebeteils 20 liegt am Berührpunkt 23 an der Stützkonstruktion 7 an (zumindest während des Abhebens des ersten Bremsbelages 4), um das Auflager zum Bewegen des Bremssattels 2 zu bilden. Am gegenüberliegenden Hebelarm, beispielsweise am zweiten, gegenüberliegenden Ende, des Abhebeteils 20 greift der Abhebeantrieb 22, beispielsweise ein Linearantrieb, an, um das Abhebeteil 20 um den Gelenkpunkt 21 zu verschwenken. Die Funktion dieser Ausführung ist natürlich dieselbe wie oben zur Fig.1 beschrieben.

In gewissen Ausführungen der Schwimmsattelbremse 1 kann es vorteilhaft sein, wenn mehr als ein Abhebeteil 20 vorgesehen ist. Wenn der Bremssattel 2 beispielsweise in mehreren Sattelführungen 9 geführt ist, wie in der Ausführung nach Fig.1 in zwei Führungszapfen 8, dann wird vorzugsweise für jede, oder zumindest für mehr als eine, Sattelführung als Stützkonstruktion 7 ein Abhebeteil 20 vorgesehen. Vorzugsweise sind so viele Abhebeteil 20 vorgesehen, sodass ein gleichmäßiges, sicheres Bewegen des Bremssattels 2 ohne Verkippen oder Verklemmen des Bremssattels 2 in einer Sattelführung 9 möglich ist. Hierbei kann für jeden Abhebeteil 20 ein Abhebeantrieb 22 vorgesehen sein, oder ein Abhebeantrieb 22 treibt gleichzeitig mehrere, vorzugsweise alle, Abhebeteile 20 an.

Ein weiterer besonderer Vorteil der Anordnung des Abhebeteils 20 am Bremssattel 2 ist darin zu sehen, dass der Abhebeteil 20, vorzugsweise mit dem Abhebeantrieb 22, gut nach außen hin abgekapselt werden kann. Der Bremssattel 2 könnte dazu eine entsprechende Ausnehmung 24 zur Aufnahme des Abhebeteils 20 und gegebenenfalls des Abhebeantriebes 22 aufweisen, der in geeigneter Weise nach außen abgeschlossen ist, beispielsweise durch Deckel, Dichtungen, etc. Damit kann der Abhebeteil 20 und gegebenenfalls der Abhebeantriebes 22 gut gegen äußere Einflüsse im Umfeld der Schwimmsattelbremse 1, beispielsweises Nässe, Eis, Schnee, Schmutz, kleine Festkörper (z.B. Steinchen, usw.), abgekapselt werden, was die Betriebssicherheit natürlich deutlich erhöht.

In einer besonders vorteilhaften Ausgestaltung dient die Andrückeinrichtung 6, oder der Andrückantrieb 13 der Andrückeinrichtung 6, gleichzeitig als Abhebeantrieb 22. Dazu kann die ohnehin vorhandene Bewegung der Andrückeinrichtung 6 in beliebiger Weise genutzt werden, um den Abhebeteil 20 zu verdrehen.

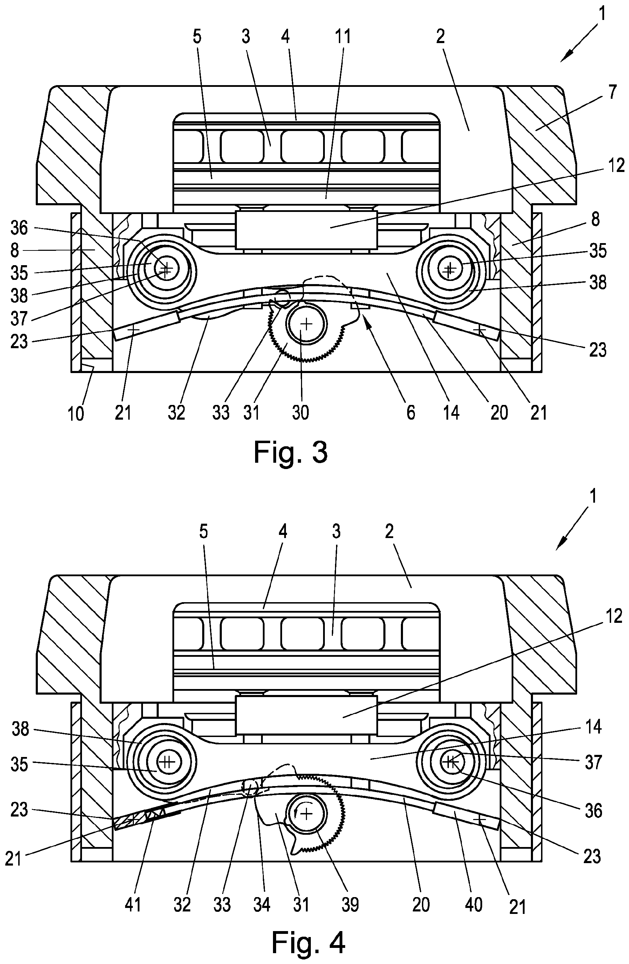

Eine besonders vorteilhafte Ausgestaltung einer Schwimmsattelbremse 1 mit einer sicheren Abhebung beider Bremsbeläge 4, 5 nach einer Bremsung ist in Fig.3 dargestellt. Darin sind gleiche Teile wie in Fig.1 mit demselben Bezugszeichen versehen und deren Funktionen werden nur mehr soweit notwendig erneut erläutert. Die Andrückeinrichtung 6 ist in dieser Ausführung realisiert wie in der WO 2014/139919 A1 der Anmelderin beschrieben. Die Andrückeinrichtung 6 ist hierbei elektromechanisch ausgeführt und umfasst eine Kurvenscheibe 31, die von einem Elektromotor 30 (als Andrückantrieb 13) angetrieben und damit verdreht werden kann. Auf einem Koppelglied 32 ist ein Abtastelement 33 (z.B. eine drehbar gelagerte Rolle) angeordnet, das die Erhebungskurve 34 der Kurvenscheibe 31 abtastet, wenn die Kurvenscheibe 31 durch den Elektromotor 30 verdreht wird. An den Enden des Koppelgliedes 32 ist jeweils ein Hebel (in Fig.3 nicht sichtbar) angelenkt, der jeweils mit einer im Bremssattel 2 drehbar gelagerten Antriebswelle 35 verbunden ist. Durch die Abtastbewegung des Abtastelements 33 wird das Koppelglied 32 bewegt und die daran angelenkten Hebel verschwenkt, wodurch die Antriebswellen 35 um deren Lagerung 36 verdreht werden. Das Koppelglied 32 mit den beiden Hebeln bilden somit einen Parallelogrammantrieb, was eine einfache und sichere Synchronisierung der Antriebswellen 35 ermöglicht. An den Antriebswellen 35 ist jeweils zumindest ein exzentrischer Wellenzapfen 38, vorzugsweise jeweils zwei an den Enden der Antriebswellen 35, vorgesehen. Die Drehachse 37 des Wellenzapfens 38 ist gegenüber der Drehachse der Lagerung 36 exzentrisch angeordnet. Auf den exzentrischen Wellenzapfen 38 ist der Andrückteil 14 (eventuell auch direkt der Halteteil 11) gelagert. Wird die Andrückwelle 35 wie beschrieben verdreht, so wird der Andrückteil 14, bzw. der daran angeordnete zweite Bremsbelag 5, aufgrund der Exzentrizität des Wellenzapfens 38, je nach Drehrichtung der Kurvenscheibe 31, in Richtung zur Bremsscheibe 3 oder von dieser weg bewegt. Damit kann ein Bremsbelag 5, der am Andrückteil 14, hier über den Verschleißnachsteller 12 und ein Halteteil 11, angeordnet ist, zur Bremsung zur Bremsscheibe 3 zugestellt, oder zum Lösen der Schwimmsattelbremse 1 von dieser abgehoben werden.

Es ist jedoch anzumerken, dass diese Ausführung der Andrückeinrichtung 6 zur Bremsbetätigung natürlich nur beispielhaft ist und für das erfindungsgemäße Prinzip der Belagsabhebung mittels Abhebeteil 20 die Andrückeinrichtung 6 beliebig anders ausgeführt sein kann, insbesondere mittels Exzenter, Hebeln, Keilen, Schrauben, Gestängen, Getriebe oder Medien wie Flüssigkeiten oder Gase.

In der gezeigten Ausführung ist die gesamte Andrückeinrichtung 6 im Inneren des Bremssattels 2, beispielsweise in einer entsprechenden Ausnehmung, gekapselt angeordnet und kann damit gut nach außen abgeschlossen werden. Damit kann die Andrückeinrichtung 6 gut gegen äußere Einflüsse im Umfeld der Schwimmsattelbremse 1, beispielsweises Nässe, Eis, Schnee, Schmutz, kleine Festkörper (z.B. Steinchen, usw.), abgeschottet werden, was die Betriebssicherheit der Schwimmsattelbremse 1 natürlich deutlich erhöht.

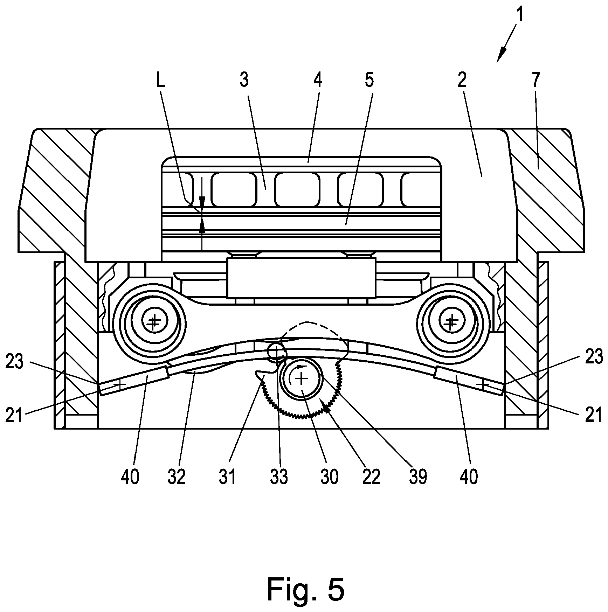

Zusätzlich ist im Bremssattel 2 der Schwimmsattelbremse 1 der Fig.3 ein Abhebeteil 20 angeordnet. Der Abhebeteil 20 ist als Bügel ausgeführt, der im Bereich der beiden gegenüberliegenden Enden in jeweils einem Gelenkpunkt 21 drehbar am Bremssattel 2 angelenkt ist. Die Lage der Gelenkpunkte 21 ist natürlich so zu wählen, dass sich mit den entstehenden Auflagern günstige Übersetzungsverhältnisse zum Bewegen des Bremssattels 2 ergeben. Der Abhebeteil 20 ist dabei zwischen den beiden Gelenkpunkten 21 gespannt, sodass sich der Abhebeteil 20 in Richtung zur Bremsscheibe 3 durchbiegt. Durch die Durchbiegung ergibt sich auch eine gewisse Vorspannung in Richtung der Stützkonstruktion 7. Die beiden axialen Enden des Abhebeteils 20 liegen wie oben beschrieben an Berührpunkten 23 an der Stützkonstruktion 7, in diesem Fall wieder der Führungszapfen 8 der Sattelführung 9, an und stützen sich daran ab. Die Funktion dieses Abhebeteils 20 wird nachfolgend anhand der Figuren 4 und 5 erläutert. Es sei aber darauf hingewiesen, dass die Funktion dieses Abhebeteils 20 auch bei jeder anderen möglichen Ausführung der Andrückeinrichtung 6 analog wäre. Die konkrete Ausgestaltung der Andrückeinrichtung 6 ist damit für die Funktion des Abhebeteils 20 unerheblich.

Die Fig.4 zeigt die Schwimmsattelbremse 1 im betätigten Zustand, in dem die beiden Bremsbeläge 4, 5 durch die Andrückeinrichtung 6 gegen die Bremsscheibe 3 gepresst werden. Dazu wird die Kurvenscheibe 31 beispielsweise gegen den Uhrzeigersinn verdreht und das Abtastelement 33 wandert entlang der Erhebungskurve 34 der Kurvenscheibe 31 und verschwenkt damit die Andrückwellen 35, was aufgrund der Exzentrizität zur Zustellbewegung des Andrückteiles 14 führt. Der Abhebeteil 20 macht dabei aufgrund der Lagerung an den Gelenkpunkten 21 die Querbewegung des Bremssattels 2 mit, wodurch sich die Berührpunkte 23 an der Stützkonstruktion 7 verschieben. Damit wird der Abhebeteil 20 wieder zentriert.

Zum Lösen der Schwimmsattelbremse 1 wird die Kurvenscheibe 31 wieder in die entgegengesetzte Richtung zurückgedreht, also beispielsweise im Uhrzeigersinn, wie in Fig.5 dargestellt. Hierbei wird der zweite, mit der Andrückeinrichtung 6 gekoppelte, Bremsbelag 5 von der Bremsscheibe 3 abgehoben, wodurch sich ein Luftspalt L ergibt. Der Andrückantrieb 13 der Andrückeinrichtung 6 (in diesem Fall der Elektromotor 30) dient in dieser Ausführung gleichzeitig als Abhebeantrieb 22 zur Betätigung des Abhebeteils 20. Dazu wird mit dem Elektromotor 30 nicht nur die Kurvenscheibe 31 angetrieben und verdreht, sondern auch eine Nocke 39. Selbstverständlich könnte aber natürlich auch ein eigenständiger Abhebeantrieb 22 vorgesehen sein. Die Nocke 39 ist so angeordnet, dass diese beim Zurückdrehen der Kurvenscheibe 31 in die Ausgangsposition (also beim Lösen der Schwimmsattelbremse 1), in der das Abtastelement 33 beispielsweise in einer Ruhestellung einrastet, gegen Ende der Rückstellbewegung in Eingriff mit dem Abhebeteil 20 gerät und diesen durch die Erhebung der Nocke 39 weiter durchbiegt. Die Nocke 39 greift dazu ungefähr in der Mitte des Abhebeteils 20 an. Durch die Durchbiegung des Abhebeteils 20 wird der Abhebeteil 20 um die Gelenkpunkte 21 verdreht und die Gelenkpunkte 21 (und damit der Bremssattel 2) werden zwangsweise verschoben, weil die Berührpunkte 23 an der Stützkonstruktion 7 als Auflager fundieren. Die Verschiebung erfolgt im Ausführungsbeispiel der Fig.5 nach oben. Durch diese Verschiebung wird zwangsweise auch der mit den Gelenkpunkten 21 verbundene Bremssattel 2 verschoben. Auf diese Weise kann der am Bremssattel 2 angeordnete erste Bremsbelag 4 kontrolliert von der Bremsscheibe 3 abgehoben werden, wie in Fig.3, die die Ausgangsposition der Schwimmsattelbremse 1 zeigt, dargestellt.

Aufgrund der Zentrierung des Abhebeteiles 20 in betätigten Zustand der Schwimmsattelbremse 1, also bei Anliegen beider Bremsbeläge 4, 5 an der Bremsscheibe 3, kann immer ein kontrolliertes Abheben beider Bremsbeläge 4, 5 um ein gewünschtes Maß realisiert werden.

Es ist dabei offensichtlich, dass durch entsprechende Dimensionierung und Anordnung des Abhebeteils 20 und des Abhebeantrieb 22, oder der Andrückeinrichtung 6, die Abhebung einfach an die Bedürfnisse der jeweiligen Schwimmsattelbremse 1 angepasst werden kann. Beispielsweise könnte eine Nocke 29 der Andrückeinrichtung 6 als Abhebeantrieb 22 auch den hebelförmigen Abhebeteil 20 der Fig.2 verdrehen oder die Andrückeinrichtung 6 oder eine davon ausgekoppelte Bewegung könnte den Abhebeteil 20 auch direkt verdrehen.

An den axialen Enden des Abhebeteils 20, die an der Stützkonstruktion 7 anliegen, können natürlich Materialien verwendet werden, die wenig Verschleiß an der Stützkonstruktion 7 verursachen. Beispielsweise könnten an den Enden des Abhebeteils 20 Hülsen 40 aus Kunststoff vorgesehen sein. Auch der Abhebeteil 20 selbst könnte aus Kunststoff gefertigt sein.

Um im Falle eines Reibschlusses zwischen Abhebeteil 20 und Stützkonstruktion 7 die Anpresskraft am Berührpunkt 23 zu erhöhen, kann zwischen Hülse 40 und Abhebeteil 20 auch eine Feder 41 angeordnet sein, wie in Fig.4 dargestellt. Dabei kann eine Feder 41 an einem Ende ausreichend sein, oder es kann an beiden Enden jeweils eine Feder 41 vorgesehen sein. Gleichfalls kann auch der Abhebeteil 20 mit einer Feder gegen die Stützkonstruktion 7 gedrückt werden.

Beispielsweise könnte man für eine Schwimmsattelbremse 1 in einem Fahrzeug eine Verschiebekraft von 50 N fordern, um den Bremssattel 2 bei einer üblichen Masse auch während einer üblichen Kurvenfahrt sicher verschieben zu können. Wenn man nun weiters einen Reibbeiwert zwischen Abhebeteil 20, oder Hülse 40, und der Stützkonstruktion 7 von 0,15 annimmt (was z.B. bestimmte Kunststoffe auf gefettetem Stahl erreichen können), käme man auf eine nötige Anpresskraft von z.B. 333 N auf einer Reibpaarung (Abhebeteil 20 oder Hülse 40 / Stützkonstruktion 7). Wenn mehrere Abhebeteile 20 vorgesehen sind, oder der Kopplungsteil wie in Fig.3 ausgeführt ist, dann kann die Verschiebkraft natürlich entsprechend aufgeteilt werden, wodurch sich die notwendige Anpresskraft für den Reibschuss ebenfalls entsprechend reduziert, also in diesem Beispiel beispielsweise auf 166,5 N. Um diese Anpresskräfte zu erreichen kann bedarfsweise zur Unterstützung eine Feder eingesetzt werden.

Der Abhebeteil 20 muss natürlich nicht während der gesamten Betätigung der Schwimmsattelbremse 1 am Berührpunkt 23 an der Stützkonstruktion 7 anliegen. An sich ist es ausreichend, wenn der Abhebeteil 20 erst dann an der Stützkonstruktion 7 angelegt wird, wenn die Schwimmsattelbremse 1 betätigt wurde, wenn die beiden Bremsbeläge 4, 5 also zur Bremsung an der Bremsscheibe 3 anliegen, um den Abhebeteil 20 vorzugsweise zu zentrieren. Der genaue Zeitpunkt wann der Abhebeteil 20 an der Stützkonstruktion 7 anliegt, also z.B. kurz bevor beide Bremsbeläge 4, 5 anliegen oder bei maximaler Zuspannung, ist dabei allerdings unerheblich. Der Abhebeteil 20 könnte auch erst mit oder während dem Lösen des zweiten Bremsbelages 5 an die Stützkonstruktion 7 angelegt werden oder sogar erst nachdem der zweite Bremsbelag 5 mit der Andrückeinrichtung 6 vollständig von der Bremsscheibe 3 abgehoben wurde, oder irgendwann dazwischen. Wichtig ist nur, dass der Abhebeteil 20 irgendwann während dem Lösen der Schwimmsattelbremse 1 für eine gewissen Zeitspanne am Berührpunkt 23 anliegt und während dieser Zeitspanne der Abhebeantrieb 22 den Abhebeteil 20 bewegt, sodass der Abhebeteil 20 den Bremssattel 2 über das entstehende Auflage am Berührpunkt 23 und den Gelenkpunkt relativ zur Stützkonstruktion 7 bewegt. Damit kann der Bremssattel 2 mit dem ersten Bremsbelag 4 beim Lösen der Schwimmsattelbremse 1 auch vor dem zweiten Bremsbelag 5 und/oder gleichzeitig damit abgehoben werden. Wie das Abheben des Abhebeteiles 20 von der Stützkonstruktion 7 oder das Anlegen des Abhebeteiles 20 an die Stützkonstruktion 7 konkret realisiert wird, ist dabei unerheblich. Vorzugsweise erfolgt das mittels des Abhebeantriebes 22 oder der Andrückeinrichtung 6 (als Abhebeantrieb 22), beispielsweise wie beschrieben über die Erhebungskurve einer Nocke 39 oder auch mehrere Nocken. Im Ausführungsbeispiel nach der Fig.3 könnte beispielsweise eine zweite Nocke oder eine entsprechende Erhebungskurve der Nocke 39 vorgesehen sein, die den Abhebeteil 20 während dem Zuspannen der Schwimmsattelbremse 1 von der Stützkonstruktion 7 abhebt.

Auch die konkrete konstruktive Ausgestaltung des Abhebeteiles 20 spielt für die Erfindung keine Rolle. Wichtig ist nur, dass der Abhebeteil 20 an einem Gelenkpunkt 21 am Bremssattel 2 angelenkt ist und zumindest für das Abheben des ersten Bremsbelages 4 von der Bremsscheibe 3 an einem Berührpunkt 23 an der Stützkonstruktion 7 zur Ausbildung eines Auflagers anliegt und zum Abheben von einem Abhebeantrieb 22 bewegt wird, sodass der Berührpunkt 23 als Auflager für den Abhebeteil 20 fungiert und der Bremssattel 2 über den Gelenkpunkt 21 verschoben wird.

Der Bremssattel kann natürlich allgemein auch als Zusammenspannteil der Reibflächen gesehen werden, womit die Erfindung gleichermaßen auch auf Mehrscheiben- und Lamellenbremsen anwendbar ist, wobei die Anzahl der Reibflächen beliebig sein kann. Die Reibflächen einer Schwimmsattelbremse 1 müssen auch nicht scheibenförmig sein, sondern können jede sinnvolle Geometrie haben, also z.B. auch gerade oder gekrümmte Flächen. Gebremst werden können sowohl Fahrzeuge aller Art, als auch Maschinen, Geräte, Propeller, Hebevorrichtungen, usw. Sogar auf Innen- oder Außenbackenbremsen lässt sich die Erfindung anwenden, indem der Backenträger (der dann dem Bremssattel gleichzusetzen ist) erfindungsgemäß so ausgeführt wird, dass beide Backen in der gewünschten Bewegung abgehoben werden.

## Patentansprüche

1. Schwimmsattelbremse mit einem schwimmend an einer Stützkonstruktion (7) der Schwimmsattelbremse (1) gelagerten Bremssattel (2), an dem ein erster Bremsbelag (4) und eine Andrückeinrichtung (6) angeordnet sind, wobei an der Andrückeinrichtung (6) ein zweiter Bremsbelag (5) angeordnet ist und die Andrückeinrichtung (6) zur Betätigung der Schwimmsattelbremse (1) den zweiten Bremsbelag (5) in Richtung zum ersten Bremsbelag (4) bewegt und zum Lösen der Schwimmsattelbremse (1) den zweiten Bremsbelag (5) in Richtung vom ersten Bremsbelag (4) weg bewegt, wobei am Bremssattel (2) ein Abhebeteil (20) an einem Gelenkpunkt (21) angelenkt ist, **dadurch gekennzeichnet, dass** der Abhebeteil (20) zumindest teilweise beim Lösen der Schwimmsattelbremse (1) an der Stützkonstruktion (7) an einem Berührpunkt (23) abgestützt ist, **und dass** ein Abhebeantrieb (22) vorgesehen ist, der den Abhebeteil (20) um den Gelenkpunkt (21) verdreht, sodass am Berührpunkt (23) ein Auflager für den Abhebeteil (20) entsteht, wodurch sich der Gelenkpunkt (21) und der Bremssattel (2) verschieben.

2. Schwimmsattelbremse nach Anspruch 1, **dadurch gekennzeichnet, dass** der Abhebeteil (20) bei betätigter Schwimmsattelbremse (1) am Berührpunkt (23) an der Stützkonstruktion (7) anliegt bis die Schwimmsattelbremse (1) vollständig gelöst ist.

3. Schwimmsattelbremse nach Anspruch 1, **dadurch gekennzeichnet, dass** der Abhebeteil (20) während der Betätigung und dem Lösen am Berührpunkt (23) an der Stützkonstruktion (7) anliegt, wobei sich der Berührpunkt (23) beim Betätigen der Schwimmsattelbremse (1) an der Stützkonstruktion (7) verschiebt.

4. Schwimmsattelbremse nach einem der Ansprüche 1 bis 3, **dadurch gekennzeichnet, dass** mehrere Abhebeteile (20) am Bremssattel (2) angeordnet sind, die jeweils an der Stützkonstruktion (7) an einem Berührpunkt (23) anliegen und die von einem oder mehreren Abhebeantrieben (22) betätigt sind.

5. Schwimmsattelbremse nach einem der Ansprüche 1 bis 3, **dadurch gekennzeichnet, dass** ein Abhebeteil (20) an zwei Gelenkpunkten (21) am Bremssattel (2) angelenkt ist und die beiden Enden des Abhebeteiles (20) zumindest teilweise beim Lösen der Schwimmsattelbremse (1) an der Stützkonstruktion (7) an jeweils einem Berührpunkt (23) abgestützt sind und der Abhebeantrieb (22) den Abhebeteil (20) um beide Gelenkpunkte (21) verdreht.

6. Schwimmsattelbremse nach einem der Ansprüche 1 bis 5, **dadurch gekennzeichnet, dass** die Andrückeinrichtung (6) gleichzeitig als Abhebeantrieb (22) dient.

7. Schwimmsattelbremse nach einem der Ansprüche 1 bis 6, **dadurch gekennzeichnet, dass** an der Stützkonstruktion (7) eine Sattelführung (9) zur Führung des Bremssattels (2) vorgesehen ist und der Abhebeteils (20) an der Sattelführung (9) am Berührpunkt (23) anliegt.

8. Schwimmsattelbremse nach Anspruch 7, **dadurch gekennzeichnet, dass** die Sattelführung (9) als Führungszapfen (8) ausgeführt ist, der in einem Führungsloch (10) des Bremssattels (2) angeordnet ist.

## Claims

1. Floating-caliper brake, comprising a brake caliper (2) floatingly mounted on a support structure (7) of the floating-caliper brake (1), on which brake caliper a first brake pad (4) and a pressing device (6) are arranged, wherein a second brake pad (5) being arranged on the pressing device (6) and the pressing device (6) moving the second brake pad (5) toward the first brake pad (4) in order to actuate the floating-caliper brake (1) and moving the second brake pad (5) away from the first brake pad (4) in order to release the floating-caliper brake (1), wherein a lifting part (20) is hinged to the brake caliper (2) at a hinge point (21), **characterized in that** the lifting part (20) is supported on the support structure (7) at a contact point (23) at least partly at releasing the floating-caliper brake (1), **and in that** a lift drive (22) is provided which rotates the lifting part (20) about the hinge point (21) such that a support for the lifting part (20) is produced at the contact point (23), whereby the hinge point (21) and the brake caliper (2) are moved.

2. Floating-caliper brake according to claim 1, **characterized in that,** when the floating-caliper brake (1) is actuated, the lifting part (20) abuts the support structure (7) at the contact point (23) until the floating-caliper brake (1) is completely released.

3. Floating-caliper brake according to claim 1, **characterized in that,** during actuation and release, the lifting part (20) abuts the support structure (7) at the contact point (23), whereas the contact point (23) being moved on the support structure (7) when the floating-caliper brake (1) is actuated.

4. Floating-caliper brake according to any of claims 1 to 3, **characterized in that** a plurality of lifting parts (20) are arranged on the brake caliper (2), which parts each abut the support structure (7) at a contact point (23) and are actuated by one or more lift drives (22).

5. Floating-caliper brake according to any of claims 1 to 3, **characterized in that** a lifting part (20) is hinged to the brake caliper (2) at two hinge points (21), and each end of the lifting part (20) is supported on the support structure (7) at a contact point (23) at least partly at releasing the floating-caliper brake (1) and the lift drive (22) rotates the lifting part (20) about the two hinge points (21).

6. Floating-caliper brake according to any of claims 1 to 5, **characterized in that** the pressing device (6) is also used as a lift drive (22).

7. Floating-caliper brake according to any of claims 1 to 6, **characterized in that** a caliper guide (9) for guiding the brake caliper (2) is provided on the support structure (7) and the lifting part (20) abuts the caliper guide (9) at the contact point (23).

8. Floating-caliper brake according to claim 7, **characterized in that** the caliper guide (9) is designed as a guide pin (8) which is arranged in a guide hole (10) of the brake caliper (2).

## Revendications

1. Frein à étrier flottant comportant un étrier de frein (2) qui est monté flottant sur une structure d'appui (7) du frein à étrier flottant (1) et sur lequel sont disposés une première garniture de frein (4) et un dispositif de pression (6), une seconde garniture de frein (5) étant disposée sur le dispositif de pression (6) et le dispositif de pression (6) déplaçant la seconde garniture de frein (5) en direction de la première garniture de frein (4) pour l'actionnement du frein à étrier flottant (1) et éloignant la seconde garniture de frein (5) de la première garniture de frein (4) pour le desserrage du frein à étrier flottant (1), une partie de soulèvement (20) étant articulée sur l'étrier de frein (2) au niveau d'un point d'articulation (21), **caractérisé en ce que** la partie de soulèvement (20) est appuyée au moins partiellement sur la structure d'appui (7) au niveau d'un point de contact (23) lors du desserrage du frein à étrier flottant (1), **et en ce qu'**un entraînement de soulèvement (22) est prévu, lequel fait tourner la partie de soulèvement (20) autour du point d'articulation (21), de sorte qu'un support pour la partie de soulèvement (20) se forme au niveau du point de contact (23), moyennant quoi le point d'articulation (21) et l'étrier de frein (2) se déplacent.

2. Frein à étrier flottant selon la revendication 1, **caractérisé en ce que** la partie de soulèvement (20), lorsque le frein à étrier flottant (1) est actionné, repose sur la structure d'appui (7) au niveau du point de contact (23) jusqu'à ce que le frein à étrier flottant (1) soit complètement desserré.

3. Frein à étrier flottant selon la revendication 1, **caractérisé en ce que** la partie de soulèvement (20) repose sur la structure d'appui (7) au niveau du point de contact (23) pendant l'actionnement et le desserrage, le point de contact (23) se déplaçant sur la structure d'appui (7) lors de l'actionnement du frein à étrier flottant (1).

4. Frein à étrier flottant selon l'une des revendications 1 à 3,
**caractérisé en ce que** plusieurs parties de soulèvement (20) sont disposées sur l'étrier de frein (2), lesquelles reposent respectivement sur la structure d'appui (7) au niveau d'un point de contact (23) et sont actionnées par un ou plusieurs entraînements de soulèvement (22).

5. Frein à étrier flottant selon l'une des revendications 1 à 3,
**caractérisé en ce qu'**une partie de soulèvement (20) est articulée au niveau de deux points d'articulation (21) sur l'étrier de frein (2) et les deux extrémités de la partie de soulèvement (20) sont appuyées au moins partiellement sur la structure d'appui (7) au niveau de respectivement un point de contact (23) lors du desserrage du frein à étrier flottant (1) et l'entraînement de soulèvement (22) fait tourner la partie de soulèvement (20) autour des deux points d'articulation (21).

6. Frein à étrier flottant selon l'une des revendications 1 à 5,
**caractérisé en ce que** le dispositif de pression (6) sert simultanément d'entraînement de soulèvement (22).

7. Frein à étrier flottant selon l'une des revendications 1 à 6,
**caractérisé en ce qu'**un guidage d'étrier (9) est prévu sur la structure d'appui (7) pour le guidage de l'étrier de frein (2) et la partie de soulèvement (20) repose sur le guidage d'étrier (9) au niveau du point de contact (23).

8. Frein à étrier flottant selon la revendication 7, **caractérisé en ce que** le guidage d'étrier (9) est réalisé en tant que tourillon de guidage (8) disposé dans un trou de guidage (10) de l'étrier de frein (2).
